# EUROPEAN PATENT SPECIFICATION

(11) **EP 1 582 052 B1**
(45) Date of publication and mention of the grant of the patent: **01.07.2015**
(21) Application number: 03814847.4
(22) Date of filing: 16.12.2003
(51) Int. Cl.: H04M 3/00

(54) **SYSTEM AND METHOD FOR DISTRIBUTED AUTHORIZATION AND DEPLOYMENT OF OVER THE AIR PROVISIONING FOR A COMMUNICATIONS DEVICE**
SYSTEM UND VERFAHREN FÜR VERTEILTEAUTORISIERUNG UND EINSATZ VON FUNKPROVISIONIERUNG FÜR EIN KOMMUNIKATIONSGERÄT
SYSTEME ET PROCEDE POUR L'AUTORISATION ET LE DEPLOIEMENT REPARTIS D'APPROVISIONNEMENT PAR VOIE RADIO POUR UN DISPOSITIF DE COMMUNICATION

(30) Priority: 31.12.2002 US 334133
(43) Date of publication of application: 05.10.2005
(73) Proprietor: Motorola Mobility LLC, Libertyville, IL 60048 (US)
(72) Inventor: LEE, Wei-Hsing, Plantation, FL 33324 (US); LIN, Jyh-Han, Coral Springs, FL 33076 (US); SMITH, Ronald, R., Coral Spings, FL 33071 (US)
(74) Representative: Openshaw, Paul Malcolm
(86) International application number: PCT/US2003/040124
(87) International publication number: WO 2004/062248

(56) References cited:
- WO-A-02/43422
- WO-A1-02/076076
- US-A- 5 754 954
- US-B1- 6 418 330
- MARRAN N L: "OVER-THE-AIR SUBSCRIBER DEVICE MANAGEMENT USING CDMA DATA AND WAP" PROCEEDINGS OF ANNUAL VIRGINIA TECH SYMPOSIUM ON WIRELESS PERSONAL COMMUNICATIONS, 2 June 1999 (1999-06-02), pages 161-170, XP001058327

## Description

### FIELD OF THE INVENTION

The invention relates to the field of communications, and more particularly to a distributed system in which onboard applications on a mobile unit, such as a cellular telephone or other device, may be enabled for over-the-air provisioning via a remote authorization server or other resource.

### BACKGROUND OF THE INVENTION

Many cellular telephones and other communications devices are now programmable in a variety of ways. For instance, many cellular telephones contain editable phone books to permit convenient storage and dialing of frequently-used or important numbers. Other cellular telephones or other devices have Web browsing, file sharing and other enhanced functionality, whether via graphical user interface, voice commands or other interfaces. Moreover, cellular telephones are becoming available which include integrated positioning capability, such as the ability to track, record and communicate handset position via GPS or other location service. Games, ring tones and other features may likewise be provisioned over the air. Other services are being and will be deployed. Over-the-air programming (OAP) standards such as those employing the Java programming language have enhanced the provisioning and delivery of such services, on an on-demand or other basis.

However, not all onboard applications bundled by original equipment manufacturers (OEMs) may be configured for OAP support. Cellular or other devices containing those types of applications may not be able to receive on-demand provisioning for new features or services as a result. Handsets and other communications devices may benefit from more open and flexible programming resources.

At the same time, when OAP capability is available there are risks associated with that heightened programmability of cellular telephones and other devices. Handsets and other devices may have the storage capacity and intelligence to store a variety of sensitive or personal information, such as a handset's International Mobile Equipment Identity (IMEI) data, a subscriber identity module (SIM) or ID, phone books, position tracking or other information. Devices which may accept or be configured to accept Java or other over-the-air code could be presented with security risks due to malicious code such as viruses, disguised games or ring tones, or other code or data. Once a malicious process has invaded the device, the user's sensitive hardware, phone book, positioning or other data could be exposed and compromised.

While user-facing security measures may be incorporated, such as requiring passwords on a handset interface before permitting access to hardware, phone book or other data, over-the-air and other threats may continue to test the integrity of the mobile device and its data, including by way of low-level code which insinuates into the device at comparatively low levels, such as application programming interfaces (APIs) and other open ports or interfaces. Better core level security on communications devices is desirable. Other problems exist.

WO 02/43422 A discloses a reconfiguration management architecture for a mobile communications system which includes a network and at least one software-definable terminal comprises a configuration management part within the or each terminal and a configuration control part. The configuration management part implements a proposed configuration to reconfigure the terminal provided the configuration control part validates the proposed configuration.

WO 02/076076 A1 discloses an arrangement in which, in a SIP network, SIP servers are provisioned with information used to authenticate subscribers and entities that will be placing calls. This information can be used during call establishment to allow or deny calls, as well as to determine the appropriate party to bill if the call involves a charge, such as a long distance charge. In addition to allowing calls between authenticated and trusted entities, there is a need for the SIP server to allow certain kinds of calls that involve non-trusted users or entities. If non-trusted entities where not recognized, trusted users and entities within the SIP network would not be able to receive calls from users or entities not know to the SIP server that is providing them services.

### SUMMARY OF THE INVENTION

In a first aspect, the invention provides a method for provisioning a communications device, as claimed in claim 1. In a further aspect, the invention provides a system for provisioning a communication device, as claimed in claim 2.

### BRIEF DESCRIPTION OF THE DRAWINGS

The invention will be described with reference to the accompanying drawings, in which like elements are referenced with like numbers, and in which:
Fig. 1 illustrates a distributed provisioning architecture, according to an embodiment of the invention.
Fig. 2 illustrates request fields in a provisioning request, according to an embodiment of the invention.
Fig. 3 illustrates a header and body of a provisioning message, according to an embodiment of the invention.
Fig. 4 illustrates data in the body of a provisioning message, according to an embodiment of the invention.
Fig. 5 illustrates a flowchart of overall provisioning processing, according to an embodiment of the invention.

### DETAILED DESCRIPTION OF EMBODIMENTS

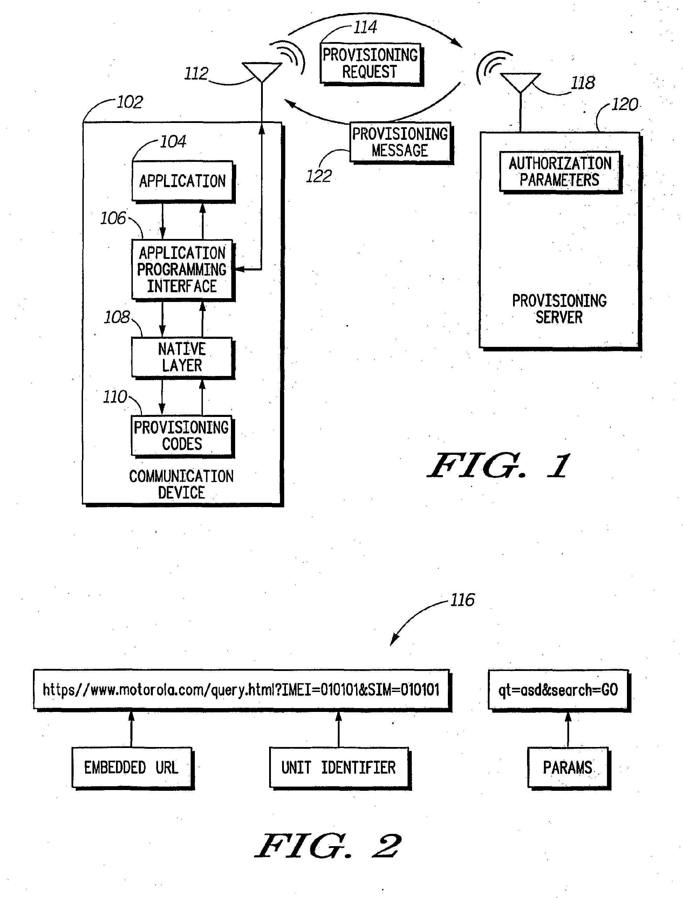

Fig. 1 illustrates a distributed communications architecture in which an embodiment of the invention may operate. As illustrated in that figure, a communications device 102 may wirelessly communicate with a provisioning server 120 to initiate and validate a provisioning request 114 made by an application 104 running on communications device 102 for access to provisioning codes 110 contained within communications device 102. Communications device 102 may be or include, for instance, a cellular telephone, a network-enabled wireless device such as a personal digital assistant (PDA) or personal information manager (PIM) equipped with an IEEE 802.11b or other wireless interface, a laptop or other portable computer equipped with an 802.11b or other wireless interface, or other communications or client devices. Communications device 102 may communicate with provisioning server 120 via antenna 112, for instance in the 800/900 MHz, 1.9 GHz, 2.4 GHz or other frequency bands, or by optical or other links.

Provisioning codes 110 may be or include, for instance, modifiable bits located within tiering structs which indicate services or features permitted or enabled on communications device 102, or other flags or information. Provisioning codes 110 may be stored in communications device 102, for instance, in electronically programmable memory (EPROM), flash cards, or other electronic, optical or other media. In embodiments the provisioning codes 110 may be, include or relate to, for instance, handset ring tones, games, contact or scheduling applications, the type or quantity of long distance service associated with the communications device 102, home or roaming areas, voice mail, text or other messaging service, or other services or features related to the communications device 102 or user.

The communications device 102 may execute one or more application 104, for instance a Java application, which in embodiments may include a Java Micro Edition application, C or C++ or other program or code. In embodiments application 104 may be or include, for instance, a contact scheduler application, a phone book application, a Web browsing application, a financial application, a personal information manager (PIM) application, a game application, a ring tone application or other application or service. In embodiments, application 104 may conform to or be implemented using the Java mobile information device profile (MIDP) standard, which applications may be referred to as MIDlets, or other languages or environments. In embodiments, application 104 may be received over the air via antenna 112, or received or stored from other sources, such as a cable-connected download.

The application 104 may interact with an application programming interface 106, which in turn communicates with provisioning server 120 and with native layer 108 executing on communications device 102. Application programming interface 106 may present a programming interface to application 104 to mediate requests to the set of provisioning codes 110 on communications device 102 and perform other tasks. In embodiments, application programming interface 106 may present application-accessible interfaces to data or object classes such as, for instance, network, user interface, data attributes and data content, and other resources. Native layer 108 may in embodiments operate at a comparatively low level in communications device 102, and act on requests passed by application programming interface 106 for access to or modification of provisioning codes 110. Native layer 108 may for example in embodiments perform supervisory, file and memory management, and other tasks.

As illustrated in Fig. 2, the provisioning request 114 may illustratively contain a set of request fields 116 to identify a location of the provisioning server 120, the communications device 102, and related parameters. As shown in that figure, the request fields 116 may include, for instance, an embedded address (universal resource locator, URL) associated with the provisioning server 120. In embodiments embedding a base URL or other address into the application programming interface may prevent the redirection of the authorization process to another remote resource. The request fields 116 may likewise contain a unit or hardware identifier related to the communications device 102, such as IMEI or other data, which may in embodiments prevent a request from one device mimicking another device.

The request fields 116 may furthermore contain request parameters, that is, variables passed to the provisioning server 120 depending on the request being made. In embodiments the request parameters may be or include alphanumeric strings, or may in embodiments include or be associated with data fields such as an array of bytes or other data. An illustrative set of request parameters shown in Fig. 2 may be or include "qt=asd&search=GO". Other request parameters and formats are possible. The request parameters may provide a degree of flexibility as to the type and number of arguments passed in to and back from the provisioning server 120. In embodiments, the request parameters may conform to the RFC1738 standard, or other standards or protocols.

When application 104 presents the provisioning request 114 to access or modify one or more parts of provisioning codes 110, to ensure the integrity of that data and prevent unauthorized or malicious access to that or other information, application programming interface 106 may trap that provisioning request 114 at the system level for offboard processing, before permitting any of provisioning codes 110 to be accessed or modified.

Specifically, when application programming interface 106 receives an provisioning request 114 from application 104 to access or modify provisioning codes 110, application programming interface 106 may communicate with provisioning server 120 to evaluate and authorize that provisioning request 114. Application programming interface 106 may communicate with the provisioning server 120 via server antenna 118, or other wireless or wired interfaces. Application programming interface 106 may transmit provisioning request 114 containing, for instance, the type of service or data requested to be accessed from the set of provisioning codes 110, the name or other identifying information for application 104, access parameters such as time of last access, passwords if requested, or other data related to the provisioning request 114 for part or all of provisioning codes 110 to provisioning server 120.

Provisioning server 120 may maintain a set of authorization parameters against which to process the provisioning request 114 for access to provisioning codes 110. Those parameters may be maintained in an authorization table 124 or other form, which parameters may be stored in or accessed by provisioning server 120. Provisioning server 120 may store a set of application identifiers which may in embodiments include a list application names or other identifiers, such as "phonebook.MID", "contactlist.c", "positiontrack.exe or other names or indicia. Provisioning server 120 may maintain a set of associated access levels, correlated by application name or other indicia, which may indicate whether a given application 104 may be permitted to access provisioning codes 110, and in embodiments at which levels or with what privileges (e.g., read, edit, or other) that access may be granted.

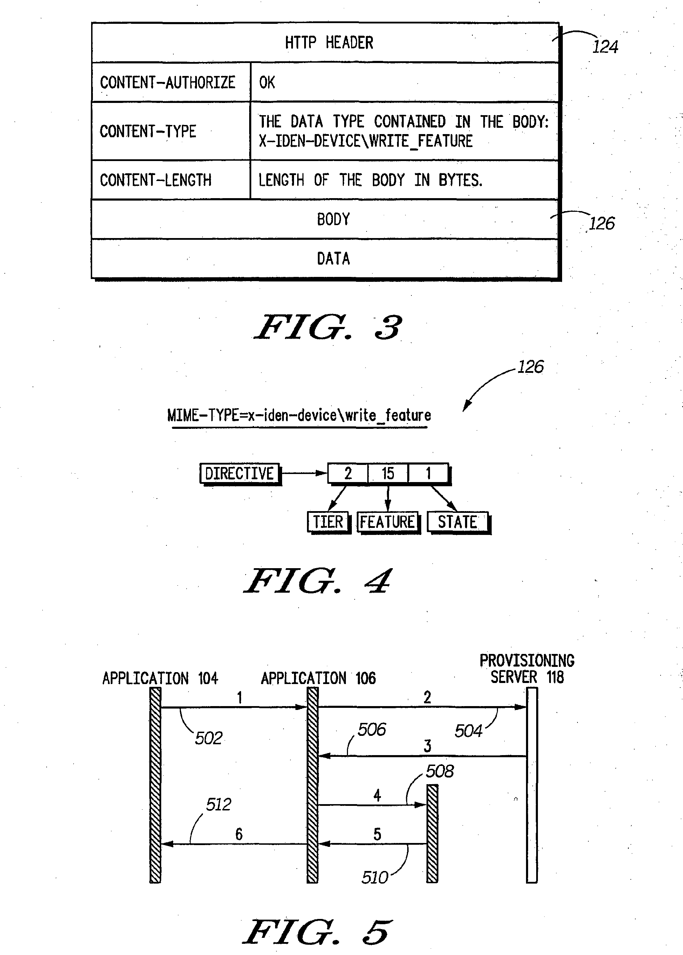

When the pending provisioning request 114 by application 104 is validated against authorization parameters by provisioning server 120, provisioning server 120 may transmit a provisioning message 122 to communications device 102. An illustrative example of provisioning message 122 is shown in Fig. 3, containing a provisioning message header 124 and provisioning message body 126. As shown in the figure, the provisioning message 122 may contain, for instance, a code, flag or other indication (Content-Authorize OK as illustrated) that application 104 may access provisioning codes 110 within a hyper text transfer protocol (HTTP) or other provisioning message header 124. Provisioning message 122 may likewise contain a code, flag, or other indication in a provisioning message header 124 or other section specifying the content-type or other provisioning message payload delivered by provisioning server 120. As illustrated, that string may be or include, for instance, a Multipurpose Internet Mail Extension (MIME) or other field specifying "x-iden-device\write_feature", indicating that application 104 may access provisioning codes 110 with write privileges according to directed conditions. The provisioning message header 124 or other section may also contain an indication of the size of the provisioning message body 126 or other payload section, in bytes. In embodiments, the provisioning message 122 may contain additional fields or variables in provisioning message header 124 or other section by which access to provisioning codes 110 may be regulated.

As illustrated in Fig. 4, the provisioning message 122 may likewise contain a provisioning message body 126 which contains the payload of the response of provisioning server 120 to the provisioning request 114. Provisioning message body 126 may contain, for example, data in MIME or other format indicating provisioning features and states which application 104 may access or modify. For example, in the status register shown in Fig. 4 the directive returned from provisioning server 120 may indicate that the 15^{th} bit in the 2^{nd} tiering flag may be turned on (state = 1), which may correspond to enabling a ring tone, voice mail, text or other messaging service, or other services or features. Other fields and indicators are possible, including different MIME extensions or other formats.

Provisioning message 122 may in embodiments contain further data or fields, in header, body or other sections. Provisioning message 122 may for instance contain a privilege field or flag which indicates whether application 104 may have the right to read, to modify, erase or perform other actions on provisioning codes 110. Provisioning message 122 may likewise contain a timeout field which sets a period of time in which application 104 may access the desired data, but after which authorization may expire. Other security variables are possible. In embodiments, for example, the authorization may be granted for a single application 104, or for more than one application, or for different applications at different times. In embodiments, authorization to access provisioning codes 110 reflected in provisioning message 122 may be made at differing levels for different parts of that data, depending on the sensitivity of the data, the nature of the application 104 making the provisioning request 114, and other factors.

When the communications device 102 receives provisioning message 122 and the desired access is granted, the application programming interface 106 may pass the provisioning request 114 to native layer 108 may retrieve or modify the requested data from provisioning codes 110. Native layer 108 may then retrieve and communicate or modify the retrieved provisioning codes 110 and pass that data to application programming interface 106 to be delivered to application 104. Application 104 may then receive and read the requested part or whole of provisioning codes 110, to operate on or modify that data. In embodiments, application 104 may receive authorization to store or write modified data into provisioning codes 110, to transmit the provisioning codes 110 over the air interface of antenna 112, or take other action, depending on the type or level of authorization received, network security and other parameters.

When the provisioning server 120 is unable to authorize the provisioning request 114 against authorization parameters 120, the provisioning message 122 may contain a deny flag or other indicator that application 104 may not access part or any of provisioning codes 110. In this case, in embodiments the communications device 102 may notify the user that an application or service has been denied access to device-specific or sensitive information. That notification may be by way for instance of a pop-up message presented on a text or graphical user interface, by a verbal message or otherwise. This notification may, for instance, assist the user in deciding to run an anti-virus or other utility on communications device 102, or take other action. In embodiments, denial of access to provisioning codes 110 may trigger an automatic logging of application 104, automatic transmission of an anti-virus or other utility to communications device 102, or other action.

Overall processing of distributed authorization for a communications device according to an embodiment of the invention is illustrated in Fig. 5. In step 502, application 104 may request one or more parts of provisioning codes 110 from the communications device 102 via application programming interface 106 and native layer 108, at the API or other level. The provisioning request 114 may in embodiments contain a parameter string as well as optional bytes of further data. In step 504, the provisioning request 114 may be transmitted to the provisioning server 120, for instance via an over-the-air protocol, which for example may be communicated using a secure or other protocol such as secure socket layer (SSL), hyper text transfer protocol secure (HTTPS) or other secure or other protocol or interface. In embodiments, the provisioning request may be generated by appending the parameter string to an embedded URL or other address for the provisioning server 120, as well as hardware identification data such as IMEI, NAM or other codes. The request may, in embodiments, encapsulate further data such as the name or other identifier of application 104, the type of data in provisioning codes 110 being requested, and other information.

In step 506, the provisioning server 120 may check the provisioning request 114 by application 104 against authorization parameters or other security fields or templates, make an authorization determination and communicate a provisioning message 122 to communications device 102, which communication in embodiments may likewise be via SSL, HTTPS or other secure or other protocols or interfaces. The provisioning message 122 may contain an indication that the provisioning request 114 is granted, denied, deferred, that further information will be required, or that other action may be taken. The provisioning message 122 may return that authorization or a directive, depending on MIME type or other factors. If the MIME type is or contains "x-iden-device\write_feature", then the directive within the body of provisioning message 122 may be used to turn selected features on or off, as specified by tiering structs or other codes. In step 508, upon receipt of a grant decision from provisioning server 120, the native layer 108 may read out the one or more parts of provisioning codes 110 which application 104 has been authorized to access. In step 510, the native layer 108 may communicate the one or more parts of provisioning codes 110 which application 104 has been authorized to access to application programming interface 106. In step 512, the application programming interface 106 may communicate the requested provisioning codes 110 to the application 104, for reading, modifying, writing, storing or taking other action. Processing may then repeat, return to an earlier point, continue to further processing or terminate.

The foregoing description of the system and method for distributed authorization for access to a communications device according to the invention is illustrative, and variations in configuration and implementation will occur to persons skilled in the art. For instance, while the invention has generally been described as being implemented in terms of a single provisioning server 120, in embodiments one or more servers or other resources may be deployed. Likewise, while the invention has been generally described in terms of a communications device 102 having an intermediary native layer 108, in embodiments the communications device 102 may operate without that type of local layer, for instance with some functionality distributed to provisioning server 120 or otherwise. Communications device 102 may conversely contain or operate on other or multiple supervisory layers. Other hardware, software or other resources described as singular may be implemented in multiple or distributed resources, while other hardware, software or other resources described as distributed may likewise be implemented as integrated resources. The scope of the invention is accordingly intended to be limited only by the following claims.

## Claims

1. A method for provisioning a communications device, the method comprising the steps of:
generating by at least one application (104), included in the device, a request to provision at least one feature or service of the communications device (102);
communicating the request to provision, by an application programming interface (106), included in the device, to a remote authorization facility via the interface to request a provisioning authorization; and
upon receiving a provisioning message in response to the request wherein the desired access is granted, allowing the at least one application (104) access to a set of provisioning codes (110), included in the device, or
upon receiving a provisioning message in response to the request wherein the desired access is denied, denying the at least one application (104) access to the set of provisioning codes (110),
wherein the provisioning message grants access to provisioning code data at differing levels for different parts of the data depending on a sensitivity of the data and the at least one application (104).

2. A system for provisioning a communication device, comprising:
a communication device (102) including
at least one application (104), the at least one application (104) adapted to generate a request to provision at least one feature or service of the communications device (102);
an interface adapted to communicate with a remote authorization facility, and
an application programming interface (106) adapted to:
execute on the communication device (102), interface to the at least one application, mediate requests to a set of provisioning codes (110) included in the device, communicate the requests to provision to the remote authorization facility via the interface to request a provisioning authorization
upon receiving a provisioning message in response to the request wherein the desired access is granted, allow the at least one application access to the set of provisioning codes, or
upon receiving a provisioning message in response to the request wherein the desired access is denied, deny the at least one application access to the set of provisioning codes (110); and
an authorization facility, the authorization facility adapted to, in response to a provisioning request from the communication device (102), generate the message granting access or the message denying access,
wherein the provisioning message grants access to provisioning code data at differing levels for different parts of the data depending on a sensitivity of the and the at least one application (104).

3. A system according to claim 2, wherein the set of provisioning codes (110) comprises at least one of ring tone codes, game codes, long distance service codes, and messaging codes.

4. A system according to claim 2, wherein the interface to the remote authorization facility comprises a wireless interface.

5. A system according to claim 2, wherein the communications device (102) comprises at least one a cellular telephone and a network-enabled digital information device.

6. A system according to claim 2, wherein the remote authorization facility comprises a server.

7. A system according to claim 2, wherein the remote authorization facility comprises a store of authorization parameters.

8. A system according to claim 2, wherein the at least one application (104) comprises an application received via a wireless interface.

9. A system according to claim 2, wherein the at least one application (104) comprises a Java application.

10. A system according to claim 2, wherein the at least one application (104) is adapted to alter the provisioning codes (110) when authorized to access the provisioning codes (110).

11. A system according to claim 2, wherein the remote authorization facility is adapted to generate a provisioning message.

## Patentansprüche

1. Verfahren für die Provisionierung einer Kommunikationsvorrichtung, umfassend die Schritte:
Generieren einer Provisionierungsanfrage für die Provisionierung von mindestens einem Merkmal oder einem Dienst der Kommunikationsvorrichtung (102) durch mindestens eine in der Vorrichtung enthaltene Anwendung (104);
Kommunizieren der Provisionierungsanfrage durch eine in der Vorrichtung enthaltene Anwendungsprogrammierschnittstelle (106) über die Schnittstelle an einen Fernautorisierungsdienst, um die Bereitstellung einer Provisionierungsautorisierung anzufordern; und
Erlauben des Zugriffs der mindestens einen Anwendung (104) auf eine Gruppe von in der Vorrichtung enthaltenen Provisionierungscodes (110) nach dem Empfang einer Provisionierungsmitteilung, in welcher der gewünschte Zugriff erlaubt wird, als Antwort auf die Anfrage; oder
Verweigern des Zugriffs der mindestens einen Anwendung (104) auf die Gruppe von Provisionierungscodes (110) nach dem Empfang einer Provisionierungsmitteilung, in welcher der gewünschte Zugriff verweigert wird, als Antwort auf die Anfrage;
wobei die Provisionierungsmitteilung den Zugriff auf Provisionierungscodedaten auf unterschiedlichen Ebenen für unterschiedliche Teile der Daten abhängig von einer Empfindlichkeit der Daten und von der mindestens einen Anwendung (104) gewährt.

2. System für die Provisionierung einer Kommunikationsvorrichtung, umfassend:
eine Kommunikationsvorrichtung (102), enthaltend,
wobei die mindestens eine Anwendung (104) angepasst ist zum Generieren einer Provisionierungsanfrage für die Provisionierung mindestens eines Merkmals oder eines Dienstes der Kommunikationsvorrichtung (102);
eine Schnittstelle, die angepasst ist mit einem Fern-Autorisierungsdienst zu kommunizieren, und
eine Anwendungsprogrammierschnittstelle (106), die angepasst ist für:
das Ausführen auf der Kommunikationsvorrichtung (102), das Herstellen einer Verbindung zu der mindestens einen Anwendung, das Vermitteln von Anfragen an eine in der Vorrichtung enthaltene Gruppe von Provisionierungscodes (110), das Kommunizieren der Provisionierungsanfragen über die Schnittstelle an den Fern-Autorisierungsdienst, um eine Provisionierungsautorisierung anzufordern, das Erlauben des Zugriffs der mindestens einen Anwendung auf die Gruppe von Provisionierungscodes nach dem Empfang einer Provisionierungsmitteilung, in welcher der gewünschte Zugriff erlaubt wird, als Antwort auf die Anfrage; oder
das Verweigern des Zugriffs der mindestens einen Anwendung auf die Gruppe von Provisionierungscodes (110) nach dem Empfang einer Provisionierungsmitteilung, in welcher der gewünschte Zugriff verweigert wird, als Antwort auf die Anfrage; und
einen Autorisierungsdienst, wobei der Autorisierungsdienst angepasst ist für das Generieren der Mitteilung über die Zugriffserlaubnis oder Mitteilung über die Zugriffsverweigerung als Antwort auf eine Provisionierungsanfrage von der Kommunikationsvorrichtung (102),
wobei die Provisionierungsmitteilung den Zugriff auf Provisionierungscodedaten auf unterschiedlichen Ebenen für unterschiedliche Teile der Daten abhängig von einer Empfindlichkeit der Daten und von mindestens einer Anwendung (104) erlaubt.

3. System nach Anspruch 2, wobei die Gruppe von Provisionierungscodes (110) mindestens einen von Klingelton-Codes, Spiele-Codes, Fernsprechdienst-Codes und Nachrichtenübermittlungs-Codes umfasst.

4. System nach Anspruch 2, wobei die Schnittstelle zu dem Fern-Autorisierungsdienst eine drahtlose Schnittstelle umfasst.

5. System nach Anspruch 2, wobei die Kommunikationsvorrichtung (102) mindestens ein Mobiltelefon und eine netzwerkfähige digitale Informationsvorrichtung umfasst.

6. System nach Anspruch 2, wobei der Autorisierungsdienst einen Server umfasst.

7. System nach Anspruch 2, wobei der Autorisierungsdienst einen Autorisierungsparameter-Speicher umfasst.

8. System nach Anspruch 2, wobei die mindestens eine Anwendung (104) eine über eine drahtlose Schnittstelle empfangene Anwendung umfasst.

9. System nach Anspruch 2, wobei die mindestens eine Anwendung (104) eine Java-Anwendung umfasst.

10. System nach Anspruch 2, wobei die mindestens eine Anwendung (104) angepasst ist für eine Änderung der Provisionierungscodes (110), wenn sie für den Zugriff auf die Provisionierungscodes (110) autorisiert ist.

11. System nach Anspruch 2, wobei der Autorisierungsdienst angepasst ist für das Generieren einer Provisionierungsmitteilung.

## Revendications

1. Procédé pour l'approvisionnement d'un dispositif de communication, le procédé comprenant les étapes consistant à :
générer, par au moins une application (104), incluse dans le dispositif, une requête pour approvisionner au moins une caractéristique ou un service du dispositif de communication (102) ;
communiquer la requête d'approvisionnement, par une interface de programmation d'application (106), incluse dans le dispositif, à un centre d'autorisation à distance via l'interface pour requérir une autorisation d'approvisionnement ; et
lors de la réception d'un message d'approvisionnement en réponse à la requête, selon lequel l'accès désiré est accordé, permettre à ladite au moins une application (104) d'accéder à un groupe de codes d'approvisionnement (110), inclus dans le dispositif, ou bien
lors de la réception d'un message d'approvisionnement en réponse à la requête, selon lequel l'accès désiré est refusé, refuser à ladite au moins une application (104) d'accéder au groupe de codes d'approvisionnement (110),
dans lequel le message d'approvisionnement accorde un accès à des données de code d'approvisionnement à des niveaux différents pour différentes parties des données en dépendance d'une sensibilité des données et de ladite au moins une application (104).

2. Système pour approvisionner un dispositif de communication, comprenant :
un dispositif de communication (102) incluant
au moins une application (104), ladite au moins une application (104) étant adaptée à générer une requête pour approvisionner au moins une caractéristique ou un service du dispositif de communication (102),
une interface adaptée à communiquer avec un centre d'autorisation à distance, et
une interface de programmation d'application (106) adaptée pour :
exécuter sur le dispositif de communication (102), en interface vers ladite au moins une application, au moyen de requêtes pour un groupe de codes d'approvisionnement (110), inclus dans le dispositif, pour communiquer les requêtes d'approvisionnement au centre d'autorisation à distance via l'interface pour requérir une autorisation d'approvisionnement,
lors de la réception d'un message d'approvisionnement en réponse à la requête, selon lequel l'accès désiré est accordé, permettre à ladite au moins une application d'accéder au groupe de codes d'approvisionnement, ou bien
lors de la réception d'un message d'approvisionnement en réponse à la requête, selon lequel l'accès désiré est refusé, refuser à ladite au moins une application d'accéder au groupe de codes d'approvisionnement (110) ; et
un centre d'autorisation, le centre d'autorisation étant adapté pour, en réponse à une requête d'approvisionnement depuis le dispositif de communication (102), générer le message accordant un accès ou le message refusant un accès,
dans lequel le message d'approvisionnement accorde un accès aux données de code d'approvisionnement à des niveaux différents pour des parties différentes des données, en dépendance d'une sensibilité des données et de ladite au moins une application (104).

3. Système selon la revendication 2, dans lequel le groupe de codes d'approvisionnement (110) comprend au moins un code parmi des codes de tonalité d'appel, des codes de jeux, des codes de service à grande distance, et des codes de messagerie.

4. Système selon la revendication 2, dans lequel l'interface vers le centre d'autorisation à distance comprend une interface sans fil.

5. Système selon la revendication 2, dans lequel le dispositif de communication (102) comprend au moins un téléphone cellulaire et un dispositif d'information numérique autorisé via un réseau.

6. Système selon la revendication 2, dans lequel le centre d'autorisation à distance comprend un serveur.

7. Système selon la revendication 2, dans lequel le centre d'autorisation à distance comprend un magasin de paramètres d'autorisation.

8. Système selon la revendication 2, dans lequel ladite au moins une application (104) comprend une application reçue via une interface sans fil.

9. Système selon la revendication 2, dans lequel ladite au moins une application (104) comprend une application Java.

10. Système selon la revendication 2, dans lequel ladite au moins une application (104) est adaptée à modifier les codes d'approvisionnement (110) lorsqu'elle est autorisée à accéder aux codes d'approvisionnement (110).

11. Système selon la revendication 2, dans lequel le centre d'autorisation à distance est adapté à générer un message d'approvisionnement.
